# EUROPEAN PATENT SPECIFICATION

(11) **EP 4 216 343 B1**
(45) Date of publication and mention of the grant of the patent: **01.04.2026**
(21) Application number: 22820532.4
(22) Date of filing: 07.06.2022
(51) Int. Cl.: H01M 10/613, H01M 10/625, H01M 10/647, H01M 10/6555, H01M 10/6556, H01M 10/6557, H01M 10/6563, H01M 10/6566, H01M 10/6567, H01M 10/6568, H01M 10/6552, H01M 50/209, H01M 50/291

(54) **BATTERY MODULE, AND BATTERY PACK AND VEHICLE INCLUDING THE SAME**
BATTERIEMODUL SOWIE BATTERIEPACK UND FAHRZEUG DAMIT
MODULE DE BATTERIE, BLOC-BATTERIE ET VÉHICULE LES COMPRENANT

(30) Priority: 08.06.2021 KR 20210074423
(43) Date of publication of application: 26.07.2023
(73) Proprietor: LG Energy Solution, Ltd., Seoul 07335 (KR)
(72) Inventor: JU, Eun-Ah, Daejeon 34122 (KR); YUN, Hyeon-Ki, Daejeon 34122 (KR); TANNENBERGER, Guenter, 85123 Pobenhausen (DE); JANKE, Jan, 74336 Brackenheim (DE); HARASZTOSI, Uwe, 74172 Neckarsulm (DE)
(74) Representative: Goddar, Heinz J.
(86) International application number: PCT/KR2022/008019
(87) International publication number: WO 2022/260404

(56) References cited:
- EP-A1- 1 643 570
- EP-A1- 3 648 243
- FR-A1- 3 100 928
- JP-A- 2009 009 853
- JP-A- 2014 078 471
- KR-A- 20140 021 830
- KR-A- 20200 001 781
- KR-B1- 102 061 745
- US-A1- 2006 214 633
- US-A1- 2010 104 927
- US-A1- 2020 266 506

## Description

### TECHNICAL FIELD

The present disclosure relates to a battery module, and a battery pack and a vehicle including the same, and more specifically, to a battery module having a structure in which an insulating cooling liquid flowing into a module housing to cool a battery cell comes into direct contact with parts such as an electrode lead, a bus bar, etc. of the battery cell to realize efficient cooling and the insulating cooling liquid is allowed to efficiently flow through a flow path between adjacent battery cells, and a battery pack and a vehicle including the same.

The present application claims priority to Korean Patent Application No. 10-2021-0074423 filed on June 8, 2021 in the Republic of Korea.

### BACKGROUND ART

In the case of a battery module that uses indirect water cooling using a cooling water, the cooling performance is limited because the cooling water does not directly contact a battery cell but indirectly contacts the battery cell through a module housing that houses the battery cell. In addition, since a cooling device such as a separate heatsink must be provided outside the module housing to form a flow path for cooling, the overall volume of the battery module is inevitably increased, which inevitably causes loss in terms of energy density.

In order to solve the problem of the indirect water cooling method, it is required to develop a battery module having a structure in which a cooling liquid is directly introduced into the module housing to realize rapid cooling through direct contact with the battery cell and electrical connection parts.

### DISCLOSURE

### Technical Problem

The present disclosure is designed to solve the problems of the related art, and therefore the present disclosure is directed to providing a battery module having a structure in which an insulating cooling liquid is introduced into the battery module and comes into direct contact with a battery cell and electrical connection parts to realize efficient cooling, and the cooling liquid introduced into the battery module may flow smoothly.

FR 3100928A1, US 2010/104927A1 and EP 3648243A1 disclose related-art battery modules.

However, the technical problems to be solved by the present disclosure are not limited to the above-described problems, and other problems not mentioned will be clearly understood by those skilled in the art from the present disclosure described below.

### Technical Solution

A battery module according to an embodiment of the present disclosure to solve the above problem is defined according to claim 1. It comprises: a sub module including a cell stack assembly having a plurality of battery cells and a flow path spacer interposed between adjacent battery cells and having a cooling liquid flow path for allowing an insulating cooling liquid to flow in direct contact with the battery cells; a module housing configured to accommodate the sub module; a front sealing plate configured to cover an opening at one longitudinal side of the module housing and having an inlet for introducing the insulating cooling liquid; and a rear sealing plate configured to cover an opening at the other longitudinal side of the module housing and having an outlet for discharging the insulating cooling liquid.

The cooling liquid flow path extends along a longitudinal direction of the flow path spacer.

The flow path spacer may be alternately in contact with a first battery cell located at one side of the flow path spacer and a second battery cell located at the other side of the flow path spacer along a height direction of the flow path spacer.

The cooling liquid flow path may include a first cooling liquid flow path formed between the flow path spacer and the first battery cell, and a second cooling liquid flow path formed between the flow path spacer and the second battery cell.

The first cooling liquid flow path and the second cooling liquid flow path may be formed alternately along the height direction of the flow path spacer.

The flow path spacer may include a first portion disposed to be spaced apart from a first battery cell located at one side of the flow path spacer and a second battery cell located at the other side of the flow path spacer; and a second portion disposed in contact with the first battery cell and the second battery cell.

The cooling liquid flow path may include a first cooling liquid flow path formed between the first portion and the first battery cell and between the second portion and the second battery cell, respectively; and a second cooling liquid flow path surrounded by the second portion.

The insulating cooling liquid flowing through the first cooling liquid flow path may perform cooling by direct contact, and the insulating cooling liquid flowing through the second cooling liquid flow path may perform cooling by indirect contact.

The first cooling liquid flow path and the second cooling liquid flow path may be alternately formed along a height direction of the flow path spacer.

The flow path spacer may include a first spacer interposed between a top of the sub module and the module housing and between a bottom of the sub module and the module housing, respectively; and a second spacer interposed between a pair of adjacent battery cells.

The second spacer may be partially interposed in a space formed between the pair of adjacent battery cells.

The second spacer may be disposed to be spaced apart from the first spacer.

The second spacer may have a plurality of spacer holes for communicating the pair of adjacent battery cells with each other.

Meanwhile, a battery pack and a vehicle according to an embodiment of the present disclosure comprises the battery module according to an embodiment of the present disclosure as described above.

### Advantageous Effects

According to one aspect of the present disclosure, the insulating cooling liquid flows into the battery module and directly contacts the battery cell and electrical connection parts, and the cooling liquid introduced into the battery module may flow smoothly, thereby allowing efficient and rapid cooling.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a complete perspective view showing a battery module according to an embodiment of the present disclosure.
FIG. 2 is an exploded perspective view showing a battery module according to an embodiment of the present disclosure.
FIG. 3 is a view showing a cross-section, taken along the line A-A' of FIG. 1.
FIG. 3a is a diagram illustrating another form of the flow path spacer shown in FIG. 3.
FIGS. 3b to 3d are diagrams illustrating other forms of the flow path spacer shown in FIG. 3.
FIG. 4 is a view showing a state in which the front end plate and the front sealing plate are removed in the battery module shown in FIG. 1.
FIGS. 5 and 6 are views showing the flow of the insulating cooling liquid for cooling.
FIG. 7 is a diagram showing a coupling structure of a bus bar frame and a flow path spacer according to the present disclosure.
FIGS. 8 and 9 are views showing a specific structure of a terminal assembly according to the present disclosure.

### BEST MODE

Hereinafter, preferred embodiments of the present disclosure will be described in detail with reference to the accompanying drawings.

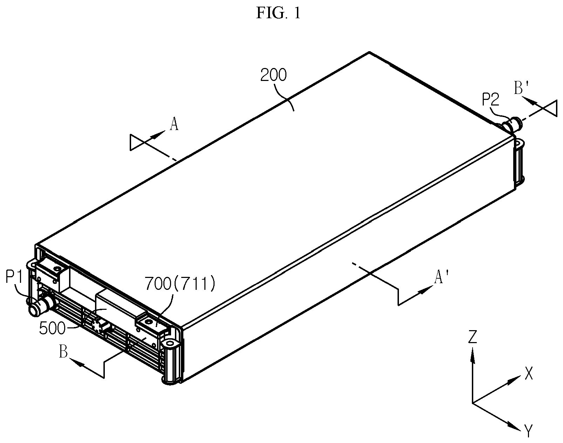

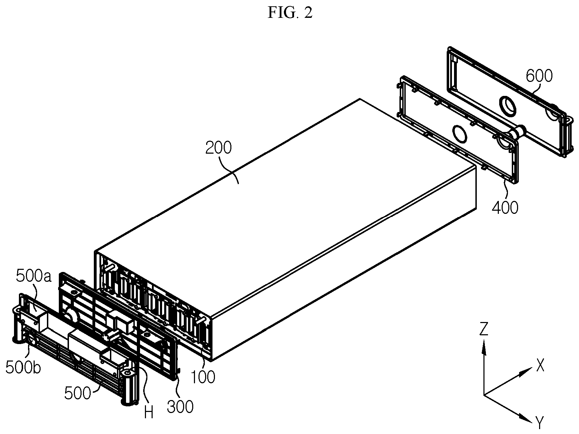

Referring to FIGS. 1 and 2, the battery module according to an embodiment of the present disclosure includes a sub module 100, a module housing 200, a front sealing plate 300 and a rear sealing plate 400. The battery module may further include a front end plate 500 and/or a rear end plate 600 and/or a pair of terminal assemblies 700 in addition to the above-described components.

Referring to FIGS.2 to 6, the sub module 100 includes a cell stack assembly 110. The sub module 100 may further include a front bus bar frame assembly 120A and a rear bus bar frame assembly 120B in addition to the cell stack assembly 110.

The cell stack assembly 110 includes a plurality of battery cells 111 and at least one flow path spacer 112 interposed between adjacent battery cells 111. The cell stack assembly 110 may further include at least one buffer pad 113 interposed between the adjacent battery cells 111. The battery cells 111, the flow path spacer 112, and the buffer pad 113 are stacked in a vertical standing form on the ground (a side parallel to the X-Y plane) to form a single cell stack assembly 110.

As the battery cell 111, a pouch-type battery cell having a pair of electrode leads 111a drawn out in opposite directions along the longitudinal direction (parallel to the X-axis) of the battery cell 111 may be used.

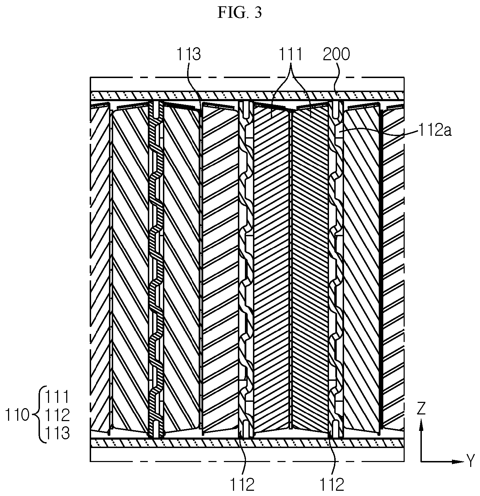

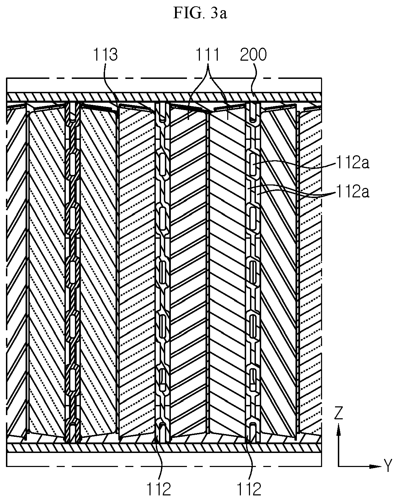

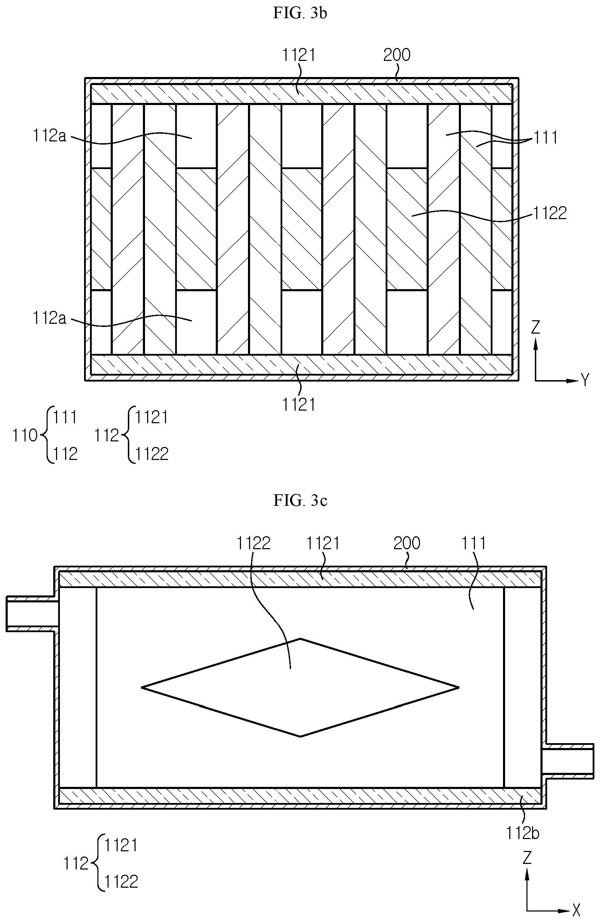

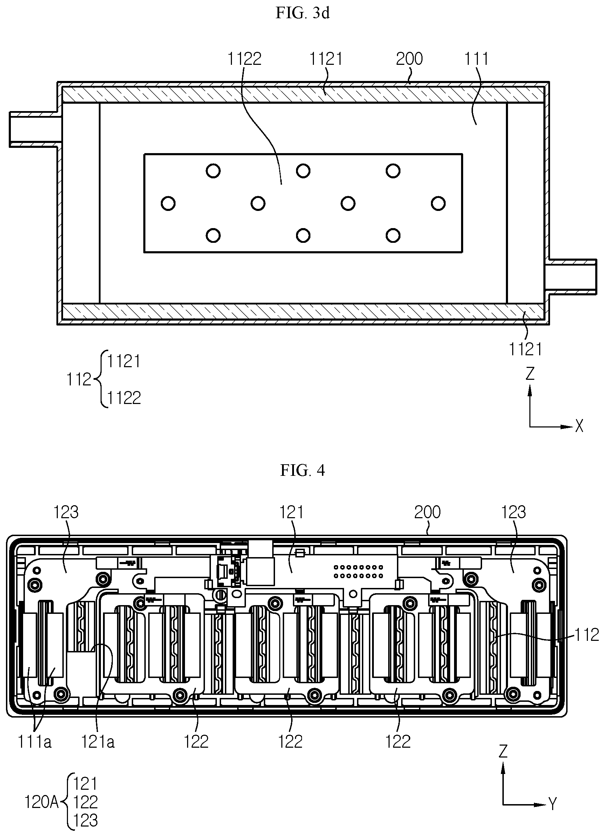

Referring to FIGS. 3 to 3d and FIGS. 5 and 6 together, the flow path spacer 112 includes a cooling liquid flow path 112a interposed between adjacent battery cells 111 so that at least a part of the insulating cooling liquid introduced into the battery module may flow in direct contact with the battery cells 111. The cooling liquid flow path 112a may be provided in plurality. The cooling liquid flow path 112a extends along the longitudinal direction (parallel to the X-axis) of the flow path spacer 112.

The flow path spacer 112 may be interposed between adjacent battery cells 111, respectively. In this case, since one side and the other side of each of the battery cells 111 are in contact with the flow path spacer 112, there is an advantage in that the cooling effect is maximized and the flow of the insulating cooling liquid introduced into the battery module becomes smoother. Meanwhile, unlike this, the number of the flow path spacers 112 may be applied only by approximately 1/2 of the number of battery cells 111. Specifically, the plurality of flow path spacers 112 may be arranged such that a pair of battery cells 111 are positioned between a pair of adjacent flow path spacers 112. In this case, only one of both sides of all the battery cells 111 is in contact with the flow path spacer 112. When the plurality of flow path spacers 112 are arranged in this way, both the improvement of the cooling efficiency of the battery cells 111 and the improvement of the energy density according to the direct cooling may be realized.

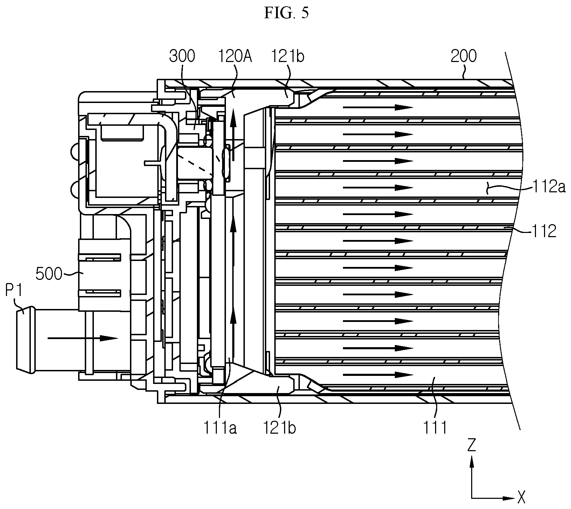

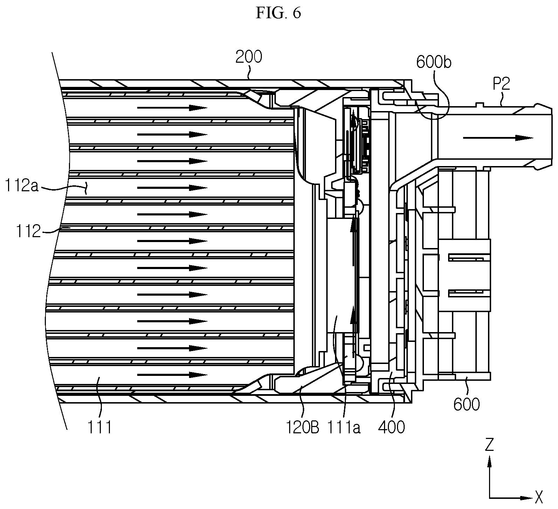

Referring to FIG. 3 together with FIGS. 5 and 6, the flow path spacer 112 may have a shape that alternately contacts a first battery cell located at one side of the flow path spacer 112 and a second battery cell located at the other side of the flow path spacer along the height direction (a direction parallel to the Z-axis) of the flow path spacer 112. In this case, the cooling liquid flow path 112a includes a first cooling liquid flow path formed between the flow path spacer 112 and the first battery cell and a second cooling liquid flow path formed between the flow path spacer 112 and the second battery cell. The first cooling liquid flow path and the second cooling liquid flow path are alternately formed along the height direction (parallel to the Z-axis) of the flow path spacer 112.

According to the structure of the flow path spacer 112 shown in FIG. 3 as described above, the insulating cooling liquid flowing through the first cooling liquid flow path directly contacts the first battery cell to perform cooling. The insulating cooling liquid flowing through the second cooling liquid flow path directly contacts the second battery cell to perform cooling.

Next, a structure of a flow path spacer having a shape different from that of the flow path spacer of FIG. 3 described above will be described with reference to FIG. 3a together with FIGS. 5 and 6. The flow path spacer 112 includes a first portion disposed to be spaced apart from the first battery cell located at one side of the flow path spacer 112 and the second battery cell located at the other side of the flow path spacer 112, and a second portion in contact with both of the pair of battery cells.

In this case, the cooling liquid flow path 112 includes a first cooling liquid flow path formed between the first portion and the first battery cell and between the second portion and the second battery cell, respectively, and a second cooling liquid flow path surrounded by the second portion. The insulating cooling liquid flowing through the first cooling liquid flow path performs cooling through direct contact with the battery cell 111, and the insulating cooling liquid flowing through the second cooling liquid flow path performs cooling through indirect contact with the battery cell 111. In addition, the first cooling liquid flow path and the second cooling liquid flow path are alternately formed along the height direction (parallel to the Z-axis) of the flow path spacer.

Next, a structure of a flow path spacer having a shape different from that of the flow path spacer shown in FIGS. 3 and 3a described above will be described with reference to FIGS. 3b to 3d along with FIGS. 2, 5 and 6.

Referring to FIGS. 3b to 3d along with FIGS. 2, 5 and 6, the flow path spacer 112 includes a first spacer 1121 and a second spacer 1122. The first spacer 1121 is interposed between the top of the sub module 100 and the module housing 200 and between the bottom of the sub module 100 and the module housing 200, respectively. The second spacer 1122 is interposed between a pair of adjacent battery cells 111.

The second spacer 1122 is partially interposed in the space formed between the pair of battery cells 111 adjacent to each other. The second spacer 1122 is disposed to be spaced apart from the first spacer 1121 so as to form a cooling liquid flow path 112a between the first spacer 1121 and the second spacer 1122. The insulating cooling liquid flowing through the cooling liquid flow path 112a directly contacts the battery cell 111 to perform cooling. The second spacer 1122 may include a plurality of spacer holes communicating between the pair of adjacent battery cells 111, as shown in FIG. 3d.

Meanwhile, in the present disclosure, the insulating cooling liquid used for cooling is a cooling liquid with improved insulation, and, for example, an insulating oil may be used.

The buffer pad 113 may be interposed between adjacent battery cells 111 to absorb volume expansion due to swelling of the battery cells 111.

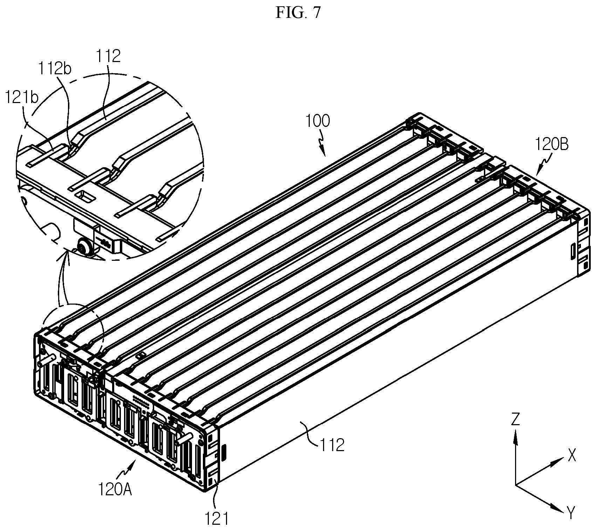

Referring to FIGS. 4 to 7, the front bus bar frame assembly 120A and the rear bus bar frame assembly 120B are coupled to one side and the other side in the longitudinal direction (parallel to the X axis) of the cell stack assembly 110, respectively, so that a plurality of battery cells 111 are electrically connected. The front bus bar frame assembly 120A has substantially the same structure except that the inner terminal 123 is provided and the rear bus bar frame assembly 120B is not provided with the inner terminal 123. Accordingly, a detailed description of the specific structure of the rear bus bar frame assembly 120B will be omitted, and a detailed description of the specific structure of the front bus bar frame assembly 120A will be intensively described.

The front bus bar frame assembly 120A includes a bus bar frame 121, a plurality of bus bars 122 and a pair of inner terminals 123. The bus bar frame 121 covers one side of the cell stack assembly 110 in the longitudinal direction (parallel to the X-axis).

The bus bar frame 121 has a plurality of cooling liquid holes 121a. The cooling liquid hole 121a functions as a passage so that the insulating cooling liquid introduced into the module housing 200 through the inlet P1 provided in the front sealing plate 300 may flow toward the cell stack assembly 110 through the bus bar frame 121.

In consideration of this function, the cooling liquid hole 121a may be formed at a position corresponding to the flow path spacer 112 provided in the cell stack assembly 110. In addition, the cooling liquid hole 121a may have a size corresponding to that of the flow path spacer 112.

The cooling liquid introduced toward the cell stack assembly 110 through the cooling liquid hole 121a formed in the front bus bar frame assembly 120A is flowed toward the rear bus bar frame assembly 120B through the cooling liquid flow path 112a formed by the flow path spacer 112 along the arrow (see FIGS. 5 and 6). The insulating cooling liquid that has moved to the rear bus bar frame 120B flows toward the rear sealing plate 400 through the cooling liquid hole 121a formed in the rear bus bar frame 120B, and is emitted out of the battery module through the outlet P2 provided in the rear sealing plate 400.

In this process, the insulating cooling liquid comes into direct contact with the electrode lead 111a of the battery cell 111, the bus bar 122 and the body of the battery cell 111 to effectively cool the battery cell 111. In addition, when the front bus bar frame assembly 120A of the present disclosure includes the inner terminal 123, the insulating cooling liquid also comes into direct contact with the inner terminal 123.

The bus bar 122 is fixed on the bus bar frame 121 and is coupled to the electrode lead 111a drawn out through a lead slit formed in the bus bar frame 121 to electrically connect the plurality of battery cells 111. The bus bar 122 may include a cooling liquid hole formed at a position corresponding to the flow path spacer 112 so that the insulating cooling liquid may pass through, similarly to the bus bar frame 121.

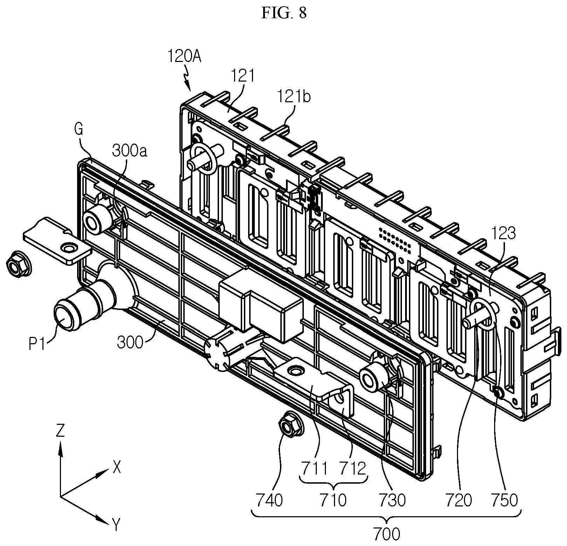

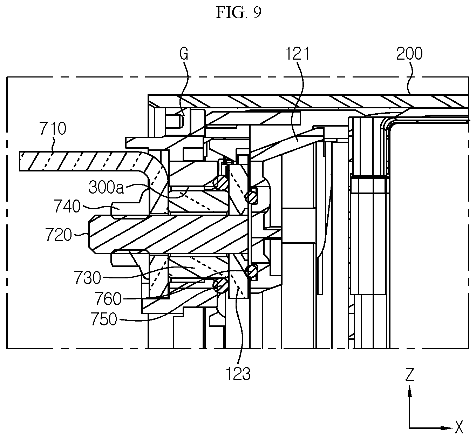

The inner terminal 123 is fixed on the bus bar frame 121 and is coupled to the electrode lead 111a of the battery cell 111 located at the outermost battery cell 111 among the battery cells 111 provided in the cell stack assembly 110. The inner terminal 123 functions as a high potential terminal. The inner terminal 123 located at one side of the longitudinal direction (parallel to the Y-axis) of the bus bar frame 121 functions as a positive electrode high potential terminal, and the inner terminal 123 located at the other longitudinal side of the bus bar frame 121 functions as a negative electrode high potential terminal. The inner terminal 123 is electrically connected to an outer terminal 710 (see FIGS. 8 and 9) to be described later.

The insulating cooling liquid flowing into the battery module may fill the space between the front sealing plate 300 and the front bus bar frame assembly 120A and may also fill the space between the rear sealing plate 400 and the rear bus bar frame assembly 120B. Accordingly, the insulating cooling liquid comes into contact with the electrode lead 111a, the bus bar 122, and the inner terminal 123, which are components that can generate heat intensively, thereby efficiently cooling the battery module.

Meanwhile, referring to FIGS. 5, 6 and 7, the bus bar frame 121 of the front bus bar frame assembly 120A and the bus bar frame 121 of the rear bus bar frame assembly 120B may include a plurality of guide ribs 121b formed on the top and bottom along the longitudinal direction (parallel to the Y-axis). The guide rib 121b has a shape extending in the direction toward the cell stack assembly 110. The guide rib 121b is formed at a position corresponding to the flow path spacer 112.

Meanwhile, the fixing portion 112b having a shape corresponding to the guide rib 121b is formed at both ends of the flow path spacer 112 in the longitudinal direction (parallel to the X-axis). By the guide rib 121b and the fixing portion 112b, the movement of the flow path spacer 112 in the vertical direction (parallel to the Z-axis) and longitudinal direction (parallel to the X-axis) is restricted. Accordingly, when the front bus bar frame assembly 120A and the rear bus bar frame assembly 120B are coupled to the cell stack assembly 110, the coupling position may be guided, thereby increasing the convenience of assembly.

Referring to FIGS. 1 to 6, the module housing 200 accommodates a sub module 100 including the cell stack assembly 110, the front bus bar frame assembly 120A, and the rear bus bar frame assembly 120B. The module housing 200 has one side and the other side open in the longitudinal direction (parallel to the X-axis).

Referring to FIGS. 5, 6, 8 and 9, the front sealing plate 300 covers the opening formed at one side of the module housing 200 in the longitudinal direction (parallel to the X-axis). The front sealing plate 300 has an inlet P1 for inflow of the insulating cooling liquid. To prevent the insulating cooling liquid from leaking, a gasket G may be interposed between the edge surface of the front sealing plate 300 and the inner surface of the module housing 200 (see FIG. 9).

The front sealing plate 300 is provided with a pair of terminal holes 300a through which components for electrical connection between the inner terminal 123 provided in the front bus bar frame assembly 120A and the outer terminal 710 to be described later may pass. The terminal hole 300a is formed at a position corresponding to the inner terminal 123.

Referring to FIG. 6, the rear sealing plate 400 covers the opening at the other side in the longitudinal direction (parallel to the X-axis) of the module housing 200, and has an outlet P2 for discharging the insulating cooling liquid. As in the case of the front sealing plate 300, a gasket G may be interposed between the edge surface of the rear sealing plate 400 and the inner surface of the module housing 200 to prevent the insulating cooling liquid from leaking.

The front sealing plate 300 and rear sealing plate 400 may be made of an insulating resin for electrical insulation.

Referring to FIGS. 8 and 9, the terminal assembly 700 includes an outer terminal 710 positioned on the outside of the front sealing plate 300 and a stud 720 electrically connecting the outer terminal 710 and the battery cell 111. The stud 720 is fixed to the inner terminal 123. The stud 720 may penetrate the inner terminal 123 and be fixed to the inner terminal 123 by press-fitting. The stud 720 fixed to the inner terminal 123 is drawn out through the terminal hole 300a formed in the front sealing plate 300 and coupled with the outer terminal 710.

The terminal assembly 700 may further include a ring-shaped terminal spacer 730 inserted into the terminal hole 300a formed in the front sealing plate 300. The terminal spacer 730 may be made of a metal material. If the terminal spacer 730 is provided, the stud 720 passes through the terminal spacer 730.

The terminal assembly 700 may further include a fastening nut 740 for fastening the outer terminal 710 to the stud 720. The fastening nut 740 is fastened to the stud 720 penetrating the terminal spacer 730 and the fastening portion 712 of the outer terminal 710 so that the fastening portion 712 of the outer terminal 710 is tightly fixed to the terminal spacer 730. Accordingly, the inner terminal 123 and the outer terminal 710 are electrically connected to each other through the terminal spacer 730.

The terminal assembly 700 may further include a first O-ring 750 that covers the outer circumference of the terminal spacer 730 and is interposed between the inner surface of the front sealing plate 300 and the inner terminal 123. Referring to FIG. 9, the first O-ring 750 prevents the insulating cooling liquid introduced into the space between the front sealing plate 300 and the bus bar frame 121 from leaking to the outside of the front sealing plate 300 through the space between the inner surface of the cooling liquid hole 300a and the terminal spacer 730.

In addition, the terminal assembly 700 may further include a second O-ring 760 that is positioned around the stud 720 press-fitted into the inner terminal 123 and exposed to the space between the inner terminal 123 and the bus bar frame 121, and is interposed between the inner terminal 123 and the bus bar frame 121. The second O-ring 760 prevents the insulating cooling liquid introduced into the space between the front sealing plate 300 and the bus bar frame 121 from leaking to the outside of the front sealing plate 300 through the space between the inner terminal 123 and the stud 720 and the space between the inner surface of the terminal spacer 730 and the stud 720.

Referring to FIGS. 1 and 2 and FIGS. 5 and 6, the front end plate 500 covers the front sealing plate 300 and is fixed to the module housing 200. The rear end plate 600 covers the rear sealing plate 400 and is fixed to the module housing 200.

The front end plate 500 includes a terminal exposing portion 500a for exposing the connection portion 711 of the outer terminal 710 to the outside of the front end plate 500, and an inlet exposing portion 500b for exposing the inlet P1 to the outside of the front end plate 500. The rear end plate 600 includes an outlet exposing portion 600b for exposing the outlet P2 to the outside of the rear end plate 600.

When the front end plate 500 and the rear end plate 600 are applied, a gasket for preventing the insulating cooling liquid from leaking may be interposed in the coupling area between the front end plate 500 and the module housing 200 and the coupling area between the rear end plate 600 and the module housing 200.

Meanwhile, a battery pack and a vehicle according to an embodiment of the present disclosure include the battery module according to the present disclosure as described above. The battery pack includes at least one battery module according to the present disclosure, and a pack housing for accommodating the at least one battery module. The battery module may be fastened to the pack housing through the fastening hole H formed in the front end plate 500 and/or the rear end plate 600. That is, the fastening hole H may provide a space into which a fastening means such as a bolt for fastening the pack housing and the battery module is inserted. Meanwhile, when the battery pack includes a plurality of battery modules, it is also possible that the plurality of battery modules are fastened to each other through the fastening hole H formed in the front end plate 500 and/or the rear end plate 600.

The battery pack according to an embodiment of the present disclosure may include at least one battery module according to an embodiment of the present disclosure as described above. The battery pack may include additional components such as a pack housing and/or a battery management system (BMS) together with the at least one battery module.

The vehicle according to an embodiment of the present disclosure may include at least one battery module and/or the battery pack as described above. The vehicle according to an embodiment of the present disclosure may be, for example, a hybrid vehicle or an electric vehicle that operates by being powered by the battery module and/or the battery pack of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Explanation of reference signs]

100: sub module
110: cell stack assembly
111: battery cell
111a: electrode lead
112: flow path spacer
1121: first spacer
1122: second spacer
112a: cooling liquid flow path
112b: fixing portion
113: buffer pad
120A: front bus bar frame assembly
120B: rear bus bar frame assembly
121: bus bar frame
121a: cooling liquid hole
121b: guide rib
122: bus bar
123: inner terminal
200: module housing
300: front sealing plate
300a: terminal hole
P1: inlet
G: gasket
400: rear sealing plate
P2: outlet
500: front end plate
500a: terminal exposing portion
500b: inlet exposing portion
600: rear end plate
600b: outlet exposing portion
700: terminal assembly
710: outer terminal
711: connection portion
712: fastening portion
720: stud
730: terminal spacer
740: fastening nut
750: first O-ring
760: second O-ring

## Claims

1. A battery module, comprising:
a sub module (100) including a cell stack assembly (110) having a plurality of battery cells (111); a flow path spacer (112) interposed between adjacent battery cells (111) and having a cooling liquid flow path (112a) for allowing an insulating cooling liquid to flow in direct contact with the battery cells (111); and a bus bar frame (121) covering one side of the cell stack assembly (110) in a longitudinal direction;
a module housing (200) configured to accommodate the sub module (100);
a front sealing plate (300) configured to cover an opening at one side of the module housing (200) in the longitudinal direction and having an inlet (P1) for introducing the insulating cooling liquid; and
a rear sealing plate (400) configured to cover an opening at the other side of the module housing (200) in the longitudinal direction and having an outlet (P2) for discharging the insulating cooling liquid,
wherein the cooling liquid flow path (112a) extends along a longitudinal direction of the flow path spacer (112), and
wherein the bus bar frame (121) comprises a plurality of cooling liquid holes (121a) configured to allow the insulating cooling liquid, introduced into the module housing (200) through the inlet (P1) provided in the front sealing plate (300), to flow toward the cell stack assembly (110) through the bus bar frame (121).

2. The battery module according to claim 1, wherein the flow path spacer (112) is alternately in contact with a first battery cell located at one side of the flow path spacer (112) and a second battery cell located at the other side of the flow path spacer (112) along a height direction of the flow path spacer (112).

3. The battery module according to claim 2, wherein the cooling liquid flow path (112a) includes a first cooling liquid flow path formed between the flow path spacer (112) and the first battery cell, and a second cooling liquid flow path formed between the flow path spacer (112) and the second battery cell.

4. The battery module according to claim 3, wherein the first cooling liquid flow path and the second cooling liquid flow path are formed alternately along the height direction of the flow path spacer (112).

5. The battery module according to claim 1, wherein the flow path spacer (112) includes:
a first portion disposed to be spaced apart from a first battery cell located at one side of the flow path spacer (112) and a second battery cell located at the other side of the flow path spacer (112); and
a second portion disposed in contact with the first battery cell and the second battery cell.

6. The battery module according to claim 1, wherein the cooling liquid flow path (112a) includes:
a first cooling liquid flow path formed between the first portion and the first battery cell and between the second portion and the second battery cell, respectively; and
a second cooling liquid flow path surrounded by the second portion.

7. The battery module according to claim 6,
wherein the insulating cooling liquid flowing through the first cooling liquid flow path performs cooling by direct contact, and
wherein the insulating cooling liquid flowing through the second cooling liquid flow path performs cooling by indirect contact.

8. The battery module according to claim 6, wherein the first cooling liquid flow path and the second cooling liquid flow path are alternately formed along a height direction of the flow path spacer (112).

9. The battery module according to claim 1, wherein the flow path spacer (112) includes:
a first spacer (1121) interposed between a top of the sub module (100) and the module housing (200) and between a bottom of the sub module (100) and the module housing (200), respectively; and
a second spacer (1122) interposed between a pair of adjacent battery cells (111).

10. The battery module according to claim 9, wherein the second spacer (1122) is partially interposed in a space formed between the pair of adjacent battery cells (111).

11. The battery module according to claim 9, wherein the second spacer (1122) is disposed to be spaced apart from the first spacer (1121).

12. The battery module according to claim 9, wherein the second spacer (1122) has a plurality of spacer holes for communicating the pair of adjacent battery cells (111) with each other.

13. A battery pack comprising the battery module according to any one of claims 1 to 12.

14. A vehicle comprising the battery module according to any one of claims 1 to 12.

## Patentansprüche

1. Batteriemodul aufweisend:
ein Submodul (100) aufweisend eine Zellenstapelanordnung (110) mit mehreren Batteriezellen (111); einen Strömungspfadabstandshalter (112), der zwischen benachbarten Batteriezellen (111) angeordnet ist und einen Kühlflüssigkeitsströmungspfad (112a) aufweist, um zu ermöglichen, dass eine isolierende Kühlflüssigkeit in direktem Kontakt mit den Batteriezellen (111) strömt; und einem Sammelschienenrahmen (121), der eine Seite der Zellenstapelanordnung (110) in einer Längsrichtung abdeckt;
ein Modulgehäuse (200), das konfiguriert ist, das Submodul (100) aufzunehmen;
eine vordere Dichtungsplatte (300), die konfiguriert ist, eine Öffnung an einer Seite des Modulgehäuses (200) in der Längsrichtung abzudecken und einen Einlass (P1) zum Einleiten der isolierenden Kühlflüssigkeit aufweist; und
eine hintere Dichtungsplatte (400), die konfiguriert ist, eine Öffnung an der anderen Seite des Modulgehäuses (200) in der Längsrichtung abzudecken und einen Auslass (P2) zum Abgeben der isolierenden Kühlflüssigkeit aufweist,
wobei sich der Kühlflüssigkeitsströmungspfad (112a) entlang einer Längsrichtung des Strömungspfadabstandshalters (112) erstreckt, und
wobei der Sammelschienenrahmen (121) mehrere Kühlflüssigkeitslöcher (121a) aufweist, die konfiguriert sind, zu ermöglichen, dass die isolierende Kühlflüssigkeit, die durch den in der vorderen Dichtungsplatte (300) vorgesehenen Einlass (P1) in das Modulgehäuse (200) eingeleitet wird, durch den Sammelschienenrahmen (121) in Richtung der Zellenstapelanordnung (110) strömt.

2. Batteriemodul nach Anspruch 1, wobei der Strömungspfadabstandshalter (112) abwechselnd mit einer ersten Batteriezelle, die sich an einer Seite des Strömungspfadabstandshalters (112) befindet, und einer zweiten Batteriezelle, die sich an der anderen Seite des Strömungspfadabstandshalters (112) befindet, entlang einer Höhenrichtung des Strömungspfadabstandshalters (112) in Kontakt steht.

3. Batteriemodul nach Anspruch 2, wobei der Kühlflüssigkeitsströmungspfad (112a) einen ersten Kühlflüssigkeitsströmungspfad, der zwischen dem Strömungspfadabstandshalter (112) und der ersten Batteriezelle ausgebildet ist, und einen zweiten Kühlflüssigkeitsströmungspfad, der zwischen dem Strömungspfadabstandshalter (112) und der zweiten Batteriezelle ausgebildet ist, aufweist.

4. Batteriemodul nach Anspruch 3, wobei der erste Kühlflüssigkeitsströmungspfad und der zweite Kühlflüssigkeitsströmungspfad abwechselnd entlang der Höhenrichtung des Strömungspfadabstandshalters (112) ausgebildet sind.

5. Batteriemodul nach Anspruch 1, wobei der Strömungspfadabstandshalter (112) aufweist:
einen ersten Abschnitt, der so angeordnet ist, dass er von einer ersten Batteriezelle, die sich an einer Seite des Strömungspfadabstandshalters (112) befindet, und einer zweiten Batteriezelle, die sich an der anderen Seite des Strömungspfadabstandshalters (112) befindet, beabstandet ist; und
einen zweiten Abschnitt, der in Kontakt mit der ersten Batteriezelle und der zweiten Batteriezelle angeordnet ist.

6. Batteriemodul nach Anspruch 1, wobei der Kühlflüssigkeitsströmungspfad (112a) aufweist:
einen ersten Kühlflüssigkeitsströmungspfad, der zwischen dem ersten Abschnitt und der ersten Batteriezelle bzw. zwischen dem zweiten Abschnitt und der zweiten Batteriezelle ausgebildet ist; und
einen zweiten Kühlflüssigkeitsströmungspfad, der von dem zweiten Abschnitt umgeben ist.

7. Batteriemodul nach Anspruch 6,
wobei die isolierende Kühlflüssigkeit, die durch den ersten Kühlflüssigkeitsströmungspfad strömt, eine Kühlung durch direkten Kontakt durchführt, und
wobei die isolierende Kühlflüssigkeit, die durch den zweiten Kühlflüssigkeitsströmungspfad strömt, eine Kühlung durch indirekten Kontakt durchführt.

8. Batteriemodul nach Anspruch 6, wobei der erste Kühlflüssigkeitsströmungspfad und der zweite Kühlflüssigkeitsströmungspfad abwechselnd entlang einer Höhenrichtung des Strömungspfadabstandshalters (112) ausgebildet sind.

9. Batteriemodul nach Anspruch 1, wobei der Strömungspfadabstandshalter (112) aufweist:
einen ersten Abstandshalter (1121), der zwischen einer Oberseite des Submoduls (100) und dem Modulgehäuse (200) bzw. zwischen einer Unterseite des Submoduls (100) und dem Modulgehäuse (200) angeordnet ist; und
einen zweiten Abstandshalter (1122), der zwischen einem Paar benachbarter Batteriezellen (111) angeordnet ist.

10. Batteriemodul nach Anspruch 9, wobei der zweite Abstandshalter (1122) teilweise in einem Raum angeordnet ist, der zwischen dem Paar benachbarter Batteriezellen (111) ausgebildet ist.

11. Batteriemodul nach Anspruch 9, wobei der zweite Abstandshalter (1122) so angeordnet ist, dass er von dem ersten Abstandshalter (1121) beabstandet ist.

12. Batteriemodul nach Anspruch 9, wobei der zweite Abstandshalter (1122) mehrere Abstandshalterlöcher aufweist, um das Paar benachbarter Batteriezellen (111) miteinander zu verbinden.

13. Batteriepack aufweisend das Batteriemodul nach einem der Ansprüche 1 bis 12.

14. Fahrzeug aufweisend das Batteriemodul nach einem der Ansprüche 1 bis 12.

## Revendications

1. Module de batterie, comprenant :
un sous-module (100) comprenant un ensemble d'empilement de cellules (110) possédant une pluralité de cellules de batterie (111) ; un écarteur de chemin d'écoulement (112) intercalé entre des cellules de batterie adjacentes (111), et possédant un chemin d'écoulement du liquide de refroidissement (112a) afin de permettre l'écoulement d'un liquide de refroidissement isolant en contact direct avec les cellules de batterie (111) ; et un cadre de barre omnibus (121) couvrant un côté de l'ensemble d'empilement de cellules (110) dans un sens longitudinal ;
un boîtier de module (200) configuré pour recevoir le sous-module (100) ;
une plaque de scellement antérieure (300) configurée pour couvrir une ouverture sur un côté du boîtier de module (200) dans le sens longitudinal, et possédant une entrée (P1) pour introduire le liquide de refroidissement isolant ; et
une plaque de scellement postérieure (400) configurée pour couvrir une ouverture sur l'autre côté du boîtier de module (200) dans le sens longitudinal, et possédant une sortie (P2) pour évacuer le liquide de refroidissement isolant,
le chemin d'écoulement du liquide de refroidissement (112a) s'étendant dans un sens longitudinal de l'écarteur de chemin d'écoulement (112), et
le cadre de barre omnibus (121) comprenant une pluralité d'orifices de liquide de refroidissement (121a) configurés pour permettre l'écoulement du liquide de refroidissement isolant, introduit dans le boîtier de module (200) à travers l'entrée (P1) pratiquée dans la plaque de scellement antérieure (300), vers l'ensemble d'empilement de cellules (110) à travers le cadre de barre omnibus (121).

2. Module de batterie selon la revendication 1, l'écarteur de chemin d'écoulement (112) se trouvant au contact tour à tour d'une première cellule de batterie située sur un côté de l'écarteur de chemin d'écoulement (112), et d'une deuxième cellule de batterie située sur l'autre côté de l'écarteur de chemin d'écoulement (112), dans le sens de la hauteur de l'écarteur de chemin d'écoulement (112).

3. Module de batterie selon la revendication 2, le chemin d'écoulement du liquide de refroidissement (112a) comprenant un premier chemin d'écoulement du liquide de refroidissement agencé entre l'écarteur de chemin d'écoulement (112) et la première cellule de batterie, et un deuxième chemin d'écoulement du liquide de refroidissement agencé entre l'écarteur de chemin d'écoulement (112) et la deuxième cellule de batterie.

4. Module de batterie selon la revendication 3, le premier chemin d'écoulement du liquide de refroidissement et le deuxième chemin d'écoulement du liquide de refroidissement étant formés en alternance dans le sens de la hauteur de l'écarteur de chemin d'écoulement (112).

5. Module de batterie selon la revendication 1, l'écarteur de chemin d'écoulement (112) comprenant :
une première partie disposée pour être écartée d'une première cellule de batterie située sur un côté de l'écarteur de chemin d'écoulement (112) et d'une deuxième cellule de batterie située sur l'autre côté de l'écarteur de chemin d'écoulement (112) ; et
une deuxième partie disposée au contact de la première cellule de batterie et de la deuxième cellule de batterie.

6. Module de batterie selon la revendication 1, le chemin d'écoulement du liquide de refroidissement (112a) comprenant :
un premier chemin d'écoulement de liquide de refroidissement agencé entre la première partie et la première cellule de batterie, et entre la deuxième partie et la deuxième cellule de batterie respectivement ; et
un deuxième chemin d'écoulement de liquide de refroidissement entouré par la deuxième partie.

7. Module de batterie selon la revendication 6,
le chemin d'écoulement de liquide de refroidissement isolant s'écoulant à travers le premier chemin d'écoulement de liquide de refroidissement effectuant un refroidissement par contact direct, et
le chemin d'écoulement de liquide de refroidissement isolant s'écoulant à travers le deuxième chemin d'écoulement de liquide de refroidissement effectuant un refroidissement par contact indirect.

8. Module de batterie selon la revendication 6, le premier chemin d'écoulement de liquide de refroidissement et le deuxième chemin d'écoulement de liquide de refroidissement étant agencés en alternance dans le sens de la hauteur de l'écarteur du chemin d'écoulement (112).

9. Module de batterie selon la revendication 1, l'écarteur du chemin d'écoulement (112) comprenant :
un premier écarteur (1121) intercalé entre une partie supérieure du sous-module (100) et le boîtier de module (200), et entre une partie inférieure du sous-module (100) et le boîtier de module (200), respectivement ; et
un deuxième écarteur (1122) intercalé entre une paire de cellules de batterie adjacentes (111).

10. Module de batterie selon la revendication 9, le deuxième écarteur (1122) étant partiellement intercalé dans un espace formé entre la paire de cellules de batterie (111) adjacentes.

11. Module de batterie selon la revendication 9, le deuxième écarteur (1122) étant disposé pour être espacé du premier écarteur (1121).

12. Module de batterie selon la revendication 9, le deuxième écarteur (1122) possédant une pluralité d'orifices d'écarteur pour permettre la communication entre elles de la paire de cellules de batterie (111) adjacentes.

13. Bloc-batterie comprenant le module de batterie selon une quelconque des revendications 1 à 12.

14. Véhicule comprenant le module de batterie selon une quelconque des revendications 1 à 12.
